# EUROPÄISCHE PATENTANMELDUNG

(11) **EP 0 772 284 A2**
(43) Veröffentlichungstag der Anmeldung: **07.05.1997**
(21) Anmeldenummer: 96115955.5
(22) Anmeldetag: 04.10.1996
(51) Int. Cl.: H02M 3/335

(54) **Schaltungsanordnung zur Erzeugung von betragsmässig unterschiedlichen Gleichspannungen**

(30) Priorität: 31.10.1995 DE 19540512
(71) Anmelder: KE KOMMUNIKATIONS-ELEKTRONIK GMBH & CO, D-30179 Hannover (DE)
(72) Erfinder: Prenner, Christian, Dipl.-Ing., 30853 Langenhagen (DE)
(74) Vertreter: Döring, Roger, Dipl.-Ing.

(57) **Zusammenfassung**

Es wird eine Schaltungsanordnung zur Erzeugung von betragsmäßig unterschiedlichen Gleichspannungen angegeben, bei welcher ein getakter Wandler (W) eingesetzt wird, der einen Transformator mit einer Eingangswicklung (1) und mindestens einer Ausgangswicklung (2) aufweist. Der Wandler (W) liefert an seiner Ausgangswicklung (2) in getrennten Zweigen mindestens zwei unterschiedliche Ausgangsspannungen (U₁,U₂), von denen eine über die Pulsbreite des Wandlers (W) geregelt wird und die beide mittels eines in den jeweiligen Zweig eingeschalteten Gleichrichters (4,10) gleichgerichtet werden. In dem Zweig der nicht geregelten Ausgangsspannung (U₂) ist zwischen Ausgangswicklung (2) und Gleichrichter (10) ein Schalter (9) angeordnet, durch welchen die Breite der vom Wandler (W) erzeugten und dem Gleichrichter (10) zugeführten Spannungsimpulse auf einen vorgegebenen Wert begrenzt wird.

## Beschreibung

Die Erfindung bezieht sich auf eine Schaltungsanordnung zur Erzeugung von betragsmäßig unterschiedlichen Gleichspannungen, bei welcher ein getakter Wandler eingesetzt wird, der einen Transformator mit einer Eingangswicklung und mindestens einer Ausgangswicklung aufweist und der an seiner Ausgangswicklung in getrennten Zweigen mindestens zwei unterschiedliche Ausgangsspannungen liefert, von denen eine über die Pulsbreite des Wandlers geregelt wird und die beide mittels eines in den jeweiligen Zweig eingeschalteten Gleichrichters gleichgerichtet werden (US-Seminar Manual "Unitrode Switching Regulated Power Supply Design", Unitrode Corporation, 1985, Seiten 6-1 bis 6-3).

Es ist verbreiteter Standard, elektronische Schaltungen aller Art mit einer Gleichspannung von beispielsweise 5 V zu versorgen. Das gilt insbesondere für integrierte Schaltungen in TTL- und HCMOS-Technologie. Um bei den immer höher werdenden Schaltfrequenzen Energie einzusparen, wurden in letzter Zeit integrierte Schaltkreise, wie z. B. Mikroprozessoren und Gate-Arrays, entwickelt, die mit einer geringeren Versorgungsspannung von 3 V oder 3,3 V arbeiten.

Im oben erwähnten Unitrode-Seminarband sind getaktete Wandler als Spannungsquellen für elektronische Schaltungen beschrieben, die mehrere unterschiedliche Ausgangsspannungen liefern. Eine der Ausgangsspannungen wird über die Pulsbreite des Wandlers geregelt. Die anderen Ausgangsspannungen werden nach der Gleichrichtung mit einem Regeltransistor linear geregelt. Zur Berücksichtigung von möglichen Lastschwankungen, insbesondere der durch den Wandler geregelten Ausgangsspannung und der Durchlaßspannung des Regeltransistors, werden die "anderen Spannungen" höher als benötigt erzeugt. Die Begrenzung auf den gewünschten Spannungswert erfolgt mit oft erheblicher Wärmeentwicklung. Der Wirkungsgrad dieser bekannten Schaltungsanordnung ist dadurch ungünstig beeinflußt.

Der Erfindung liegt die Aufgabe zugrunde, die eingangs geschilderte Schaltungsanordnung so weiterzubilden, daß ihr Wirkungsgrad gleichbleibend verbessert ist.

Diese Aufgabe wird gemäß der Erfindung dadurch gelöst, daß in dem Zweig der nicht geregelten Ausgangsspannung zwischen Ausgangswicklung und Gleichrichter ein Schalter angeordnet ist, durch welchen die Breite der vom Wandler erzeugten und dem Gleichrichter zugeführten Spannungsimpulse auf einen vorgegebenen Wert begrenzt wird.

Mit dieser Schaltung läßt sich ohne wesentliche Wärmeentwicklung neben der geregelten Ausgangsspannung mindestens eine weitere Ausgangsspannung erzeugen, die betragsmäßig von der geregelten Ausgangsspannung abweicht. Der in bevorzugter Ausführungsform als MOSFET ausgeführte Schalter unterbricht für jeden Spannungsimpuls die Verbindung zwischen dem Wandler und dem Gleichrichter, sobald die gewünschte Ausgangsspannung betragsmäßig erreicht ist. Dadurch wird die Breite der vom Wandler gelieferten Spannungsimpulse für den Gleichrichter begrenzt. Es muß damit keine Energie durch Herunterregeln einer Spannung bzw. eines Stromes mehr vernichtet werden. Die durch den Schalter erzeugten Verluste sind gering, so daß die Schaltungsanordnung nur unwesentlich erwärmt wird.

In bevorzugter Ausführungsform wird der Schalter durch einen geregelten Pulsweitenmodulator angesteuert, der die Ausgangsspannung als Istwert erfaßt und dem der gewünschte Spannungswert als Sollwert aufgegeben ist. Lastschwankungen der geregelten Ausgangsspannung und andere Einflüsse wirken sich dann nicht auf die entsprechende Ausgangsspannung aus.

Ausführungsbeispiele des Erfindungsgegenstandes sind in den Zeichnungen dargestellt.

Es zeigen:
Fig. 1 eine Schaltungsanordnung nach der Erfindung in schematischer Darstellung.
Fig. 2 eine Ausgestaltung der Schaltungsanordnung nach Fig. 1.
Fig. 3 eine von den Fig. 1 und 2 abweichende Ausführungsform der Schaltungsanordnung.

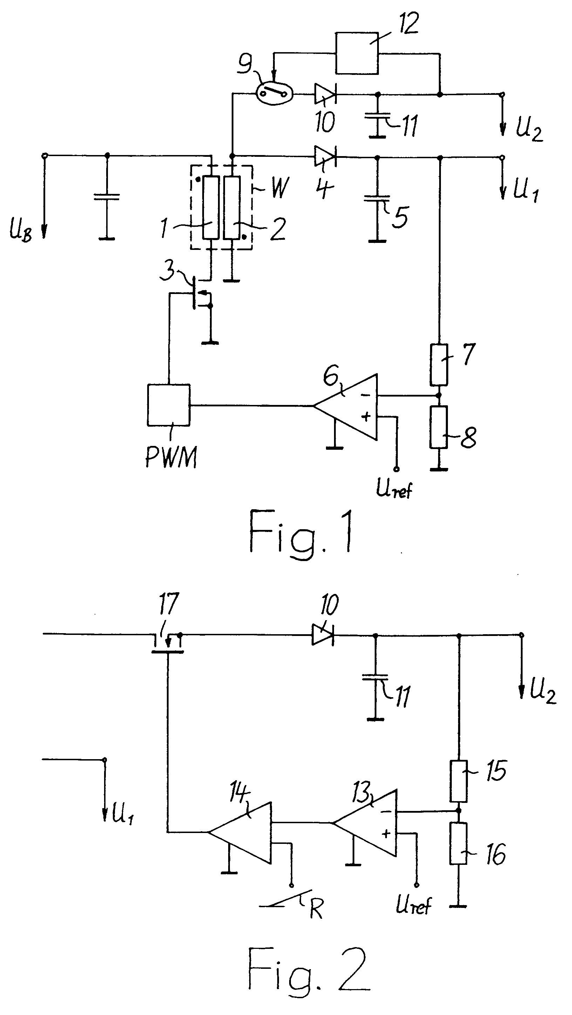

Der gestrichelt umrandete, getaktete Wandler W hat gemäß Fig. 1 eine Eingangswicklung 1 und eine Ausgangswicklung 2. Die Eingangswicklung 1 liegt an einer Gleichspannung U_{B} von beispielsweise 60 V. In Reihe mit der Eingangswicklung 1 ist ein Transistor 3 eingeschaltet, dessen Steuerelektrode mit einem Pulsweitenmodulator PWM verbunden ist. Als Transistor 3 wird mit Vorteil ein Feldeffekttransistor eingesetzt, vorzugsweise ein MOSFET.

Von der Ausgangswicklung 2 gehen zwei Zweige aus, von denen zwei unterschiedliche Ausgangsspannungen U₁ und U₂ erzeugt werden. Im Zweig von U₁ liegen ein Gleichrichter 4 und ein Kondensator 5. U₁ ist geregelt. Dazu wird ein Regler 6 verwendet, dessen einer Eingang an einen aus den ohmschen Widerständen 7 und 8 bestehenden Spannungsteiler angeschlossen ist, mit dem U₁ heruntergeteilt wird. An den anderen Eingang des Reglers 6 ist eine dem Sollwert von U₁ entsprechende Referenzspannung U_{ref} angeschlossen. Der Ausgang des Reglers 6 ist mit dem PWM verbunden. U₁ wird auf diese Weise durch Veränderung der Pulsbreite des W durch den PWM geregelt.

Im Zweig von U₂ sind ein Schalter 9, ein Gleichrichter 10 und ein Kondensator 11 angeschlossen. Der Schalter 9 wird in Abhängigkeit von der Größe von U₂ geöffnet und geschlossen. Dazu wird U₂ als Istwert erfaßt und durch einen weiter unten näher beschriebenen Pulsweitenmodulator 12 eingestellt.

Die Schaltungsanordnung nach Fig. 1 arbeitet wie folgt:

Sobald der PWM eingeschaltet und die Spannung U_{B} an den W angelegt ist, wird der Kondensator 5 durch die Spannungsimpulse des W geregelt auf U₁ aufgeladen. Gleichzeitig wird auch der Kondensator 11 aufgeladen, wenn der Schalter 9 geschlossen ist. Die Schließstellung des Schalters 9 bestimmt die Höhe der Spannung, auf welche der Kondensator 11 aufgeladen wird, und damit die Höhe von U₂. Im vorliegenden Fall ist U₂ kleiner als U₁. Der Schalter 9 wird dafür pro Spannungsimpuls des W so früh geöffnet, daß der Spannungsimpuls nicht in seiner ganzen Breite zum Gleichrichter 10 gelangt. Ein Teil des Spannungsimpulses wird vielmehr unterdrückt, so daß der Kondensator 11 auf einen Spannungswert aufgeladen wird, der niedriger als der Spannungswert von U₁ ist.

Zur Regelung der Stellung des Schalters 9 und damit zur Regelung von U₂ wird gemäß Fig. 2 die am Kondensator 11 anliegende Spannung ständig als Istwert erfaßt und einem Pulsweitenmodulator zugeführt, der hier aus einem Regler 13 und einem Komparator 14 besteht. Der Regler 13 ist mit seinem einen Eingang an einen aus den ohmschen Widerständen 15 und 16 bestehenden Spannungsteiler angeschlossen, mit dem U₂ heruntergeteilt wird. Dem zweiten Eingang des Reglers 13 wird als Sollwert eine Referenzspannung U_{ref} zugeführt, die dem gewünschten Wert von U₂ entspricht. Der Ausgang des Reglers 13 ist mit dem einen Eingang des Komparators 14 verbunden. Am anderen Eingang des Komparators 14 liegt eine Rampe R in Form einer linear ansteigenden Spannung. Der im Zweig von U₂ liegende Schalter ist in bevorzugter Ausführungsform als Feldeffekttransistor ausgebildet, und zwar vorzugsweise als MOSFET 17. Der Ausgang des Komparators 14 ist mit der Steuerelektrode des MOSFETs 17 verbunden.

Die Wirkungsweise der Schaltungsanordnung nach Fig. 2 ist grundsätzlich die gleiche, wie sie für Fig. 1 beschrieben ist. Der Istwert U₂ wird dem Regler 13 aufgegeben, dessen Ausgang den Komparator 14 beeinflußt. An dessen Ausgang steht so lange eine logische 1, wie die Spannung der Rampe R am zweiten Eingang des Komparators 14 kleiner als die vom Regler 13 gelieferte Spannung ist. Während dieser Zeit ist der MOSFET 17 stromdurchlässig. Wenn die Spannung der Rampe R mit der vom Regler 13 gelieferten Spannung übereinstimmt, steht am Ausgang des Komparators 14 eine logische 0. Der MOSFET 17 wird dadurch sofort stromundurchlässig. Der vom W gelieferte Spannungsimpuls wird dann abgebrochen. Dieser Vorgang läuft bei jedem vom W gelieferten Spannungsimpuls ab, da der Komparator 14 bzw. die an seinem zweiten Eingang anliegende Rampe R synchron zum PWM arbeiten.

Da der MOSFET 17 schnell schaltet, entstehen bei der Begrenzung der Spannungsimpulse kaum Verluste. Die Schaltungsanordnung wird daher nur unwesentlich erwärmt.

Wenn die Zweige der beiden unterschiedlichen Spannungen von der gleichen Ausgangswicklung 2 des W ausgehen, ist die Spannung U₂ kleiner als U₁. Die beiden Spannungswerte könnten höchstens miteinander übereinstimmen.

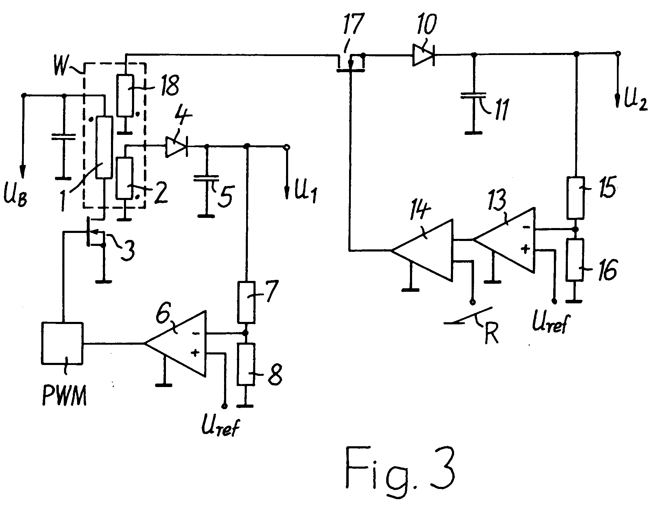

Wenn eine gegenüber U₁ höhere Ausgangsspannung eingestellt werden soll, müssen für U₁ und U₂ zwei getrennte Ausgangswicklungen des W verwendet werden. Das ist in Fig. 3 dargestellt. Die nicht geregelte Ausgangsspannung U₂ wird hier an einer zweiten Ausgangswicklung 18 des W erzeugt. Selbstverständlich kann U₂ auch bei der Ausführungsform mit zwei Ausgangswicklungen niedriger als U₁ sein.

Neben der geregelten Spannung U₁ kann nach dem geschilderten Prinzip auch mehr als eine zusätzliche Ausgangsspannung erzeugt werden. Dabei kann für jede Ausgangsspannung eine eigene Ausgangswicklung des W verwendet werden. Es können aber auch zwei oder mehr Zweige von nur einer Ausgangswicklung des W ausgehen.

## Patentansprüche

1. Schaltungsanordnung zur Erzeugung von betragsmäßig unterschiedlichen Gleichspannungen, bei welcher ein getakter Wandler eingesetzt wird, der einen Transformator mit einer Eingangswicklung und mindestens einer Ausgangswicklung aufweist und der an seiner Ausgangswicklung in getrennten Zweigen mindestens zwei unterschiedliche Ausgangsspannungen liefert, von denen eine über die Pulsbreite des Wandlers geregelt wird und die beide mittels eines in den jeweiligen Zweig eingeschalteten Gleichrichters gleichgerichtet werden, dadurch gekennzeichnet, daß in dem Zweig der nicht geregelten Ausgangsspannung (U₂) zwischen Ausgangswicklung (2) und Gleichrichter (10) ein Schalter (9) angeordnet ist, durch welchen die Breite der vom Wandler (W) erzeugten und dem Gleichrichter (10) zugeführten Spannungsimpulse auf einen vorgegebenen Wert begrenzt wird.

2. Schaltungsanordnung nach Anspruch 1, dadurch gekennzeichnet,
- daß die nicht geregelte Ausgangsspannung (U₂) als Istwert einem Regler (13) zugeführt wird, dem als Sollwert eine der gewünschten Ausgangsspannung (U₂) entsprechende Referenzspannung aufgegeben wird,
- daß an den Ausgang des Reglers (13) ein Komparator (14) mit seinem einen Eingang angeschlossen wird, an dessen anderem Eingang eine Rampe (R) in Form einer linear ansteigenden Spannung anliegt und
- daß der Schalter (9) durch den Komparator (14) geöffnet wird, sobald der Istwert der Ausgangsspannung (U₂) den Sollwert erreicht hat.

3. Schaltungsanordnung nach Anspruch 1 oder 2, dadurch gekennzeichnet, daß Pulsweitenmodulator (PWM) und Komparator (14) synchron zueinander arbeiten.

4. Schaltungsanordnung nach einem der Ansprüche 1 bis 3, dadurch gekennzeichnet, daß als Schalter (9) ein Feldeffekttransistor eingesetzt ist, vorzugsweise ein MOSFET (17), dessen Steuerelektrode mit dem Ausgang des Komparators (14) verbunden ist.
